# EUROPÄISCHE PATENTSCHRIFT

(11) **EP 3 500 421 B1**
(45) Veröffentlichungstag und Bekanntmachung des Hinweises auf die Patenterteilung: **24.09.2025**
(21) Anmeldenummer: 17751349.6
(22) Anmeldetag: 03.08.2017
(51) Int. Cl.: B29C 73/10, B29C 73/02, B29C 73/34, B29C 35/08

(54) **REPARATURVERFAHREN FÜR EIN WERKSTÜCK AUS EINEM KUNSTSTOFFMATERIAL, REPARATURVORRICHTUNG**
REPAIR METHOD FOR A WORKPIECE OF A PLASTICS MATERIAL, REPAIR DEVICE
PROCÉDÉ DE RÉPARATION D'UNE PIÈCE EN MATIÈRE PLASTIQUE, DISPOSITIF DE RÉPARATION

(30) Priorität: 17.08.2016 DE 102016115284
(43) Veröffentlichungstag der Anmeldung: 26.06.2019
(73) Patentinhaber: Deutsches Zentrum für Luft- und Raumfahrt e.V., 51147 Köln (DE)
(72) Erfinder: SCHNEIDER, Marvin, 71083 Herrenberg (DE); KADEN, Markus, 70372 Stuttgart (DE)
(74) Vertreter: Hoeger, Stellrecht & Partner Patentanwälte mbB
(86) Internationale Anmeldenummer: PCT/EP2017/069636
(87) Internationale Veröffentlichungsnummer: WO 2018/033399

(56) Entgegenhaltungen:
- DE-A1- 102011 076 463
- US-A1- 2008 175 753
- US-A1- 2012 145 703
- US-A1- 2015 001 768

## Beschreibung

Die Erfindung betrifft ein Reparaturverfahren für ein Werkstück aus einem Kunststoffmaterial, wobei eine Induktionsheizvorrichtung an einem Reparaturbereich des Werkstücks positioniert wird, die Induktionsheizvorrichtung eine Magnetfelderzeugungseinrichtung und eine Wärmequelle umfasst, wobei die Magnetfelderzeugungseinrichtung und die Wärmequelle getrennte Komponenten der Induktionsheizvorrichtung sind, welche getrennt voneinander positioniert werden können, die Wärmequelle zwischen der Magnetfelderzeugungseinrichtung und dem Reparaturbereich angeordnet wird, an dem Reparaturbereich ein Reparaturmaterial positioniert wird, das Reparaturmaterial über die an dem Reparaturbereich angeordnete Wärmequelle erwärmt wird, und die Wärmequelle durch die Magnetfelderzeugungseinrichtung induktiv erwärmt wird.

Die Erfindung betrifft ferner eine Reparaturvorrichtung an einem Werkstück aus einem Kunststoffmaterial, umfassend eine Induktionsheizvorrichtung, welche an dem Werkstück angeordnet ist, und ein Reparaturmaterial, welches an einem Reparaturbereich des Werkstücks angeordnet ist, wobei die Induktionsheizvorrichtung eine Magnetfelderzeugungseinrichtung und eine Wärmequelle umfasst, die Magnetfelderzeugungseinrichtung und die Wärmequelle getrennte Komponenten der Induktionsheizvorrichtung sind, welche getrennt voneinander positioniert werden können, die Wärmequelle zwischen der Magnetfelderzeugungseinrichtung und dem Reparaturbereich angeordnet ist, und die Reparaturvorrichtung mindestens einen Temperatursensor aufweist.

Aus der DE 20 2015 100 080 U1 ist eine Induktionsheizvorrichtung bekannt, umfassend einen Träger und eine Spulenvorrichtung, welche an dem Träger angeordnet ist. Die Spulenvorrichtung umfasst eine Mehrzahl von spiralförmigen Wicklungen, welche in Reihen und Spalten angeordnet sind, wobei die spiralförmigen Wicklungen so ausgebildet sind, dass bei Stromdurchfluss der spiralförmigen Wicklungen eine Stromrichtung in benachbarten Randwicklungsabschnitten von in einer Reihe oder Spalte benachbarten spiralförmigen Wicklungen mindestens näherungsweise gleich ist.

Aus der DE 10 2013 111 266 A1 ist eine Spulenvorrichtung bekannt, umfassend mindestens eine stromtragende Hochfrequenzlitze und einen Träger für die mindestens eine Hochfrequenzlitze. Der mindestens eine Träger ist ein Maschennetz und die mindestens eine Hochfrequenzlitze ist über einen oder mehrere Haltefäden, welche an der mindestens einen Hochfrequenzlitze und Stegen des Maschennetzes anliegen, gehalten.

Aus der US 8,980,029 B1 ist eine Reparaturvorrichtung für Verbundwerkstoffe bekannt. Die Reparaturvorrichtung umfasst eine Magnetfelderzeugungseinrichtung und einen Suszeptor. Die Magnetfelderzeugungseinrichtung erzeugt einen magnetischen Fluss, welcher den Suszeptor induktiv erwärmt. Die Magnetfelderzeugungseinrichtung kann durch einen Verdichtungsdruck gegen eine Reparatureinheit mit einer Reparaturstelle gedrückt werden.

Aus der DE 42 37 857 C2 ist ein Verfahren zur zeitlich getakteten Ermittlung von auf eine Regelstrecke einwirkenden Stellgrößen bekannt. Bei dem Verfahren wird aus einer primären Eingangsgröße des zuletzt zurückliegenden Taktes oder primären Eingangsgrößen zurückliegender Takte und aus einer primären Eingangsgröße des augenblicklichen Taktes eine fiktive Eingangsgröße für den nächstfolgenden Takt ermittelt, wobei zumindest die fiktive Eingangsgröße zur Ermittlung der Stellgröße nach der Fuzzy-Logik berücksichtigt wird.

Aus der DE 197 31 258 A1 ist ein Verfahren zur Messung der Temperatur eines induktiv beheizten Elements bekannt. Das beheizte Element weist eine Sekundär-Heizwicklung auf, mittels welcher einer stromdurchflossenen Primärwicklung das Element beheizende Induktionsströme erzeugt werden. Die Primärwicklung wird für das Steuern oder Regeln der Temperatur des Elements intermittierend mit einer Stromquelle verbunden, die Temperatur des beheizten Elements wird mittels eines Temperatursensors erfasst, und die Messung der Temperatur wird in Bestromungspausen der Primärwicklung vorgenommen.

Aus der EP 1 732 357 A2 ist eine Heizvorrichtung für ein Induktionsgargerät bekannt. Die Heizvorrichtung umfasst einen Induktor zur Erwärmung eines Heizelements eines Garbehälters und eine Steuereinheit, die dazu vorbereitet ist, das Heizelement auf das Erreichen einer Kochtemperatur zu überwachen. Die Überwachung erfolgt durch die Einstellung einer Frequenz des Wechselstroms, der den Induktor durchfließt, und die Erfassung zumindest einer elektrischen Größe in Abhängigkeit von der Zeit.

Aus der DE 10 2013 201 681 A1 ist ein Induktionskochgerät mit einem IR-Sensor bekannt.

Aus der GB 2 192 294 A ist ein Verfahren zur induktiven Beheizung eines Endbereichs eines länglichen Werkstücks bekannt.

Aus der US 2011/0139769 A1 ist eine Induktionsheizvorrichtung bekannt, umfassend eine Heizmatte, eine Magnetfelderzeugungseinrichtung und eine Wärmequelle. Magnetfelderzeugungseinrichtung und Wärmequelle sind in das Strukturmaterial der Heizmatte integriert.

Aus der EP 2 796 265 A1 ist eine Reparaturvorrichtung für ein Werkstück aus einem Faserverbundwerkstoff bekannt, umfassend eine Induktionsheizvorrichtung und ein Reparaturmaterial, welches an dem Werkstück angeordnet wird, und welches mittels der Induktionsheizvorrichtung erwärmt wird.

Aus der US 2012/145703 A1 ist eine Vorrichtung zum Aushärten eines Verbundteils bekannt, umfassend ein Werkzeug mit einer Werkzeugoberfläche, welche an eine erste Seite des Teils anlegbar ist, einen ersten induktiven Heizkreis zum Erwärmen der Werkzeugoberfläche, eine Heizdecke, die über eine zweite Seite des Teils anordenbar ist, einen zweiten induktiven Heizkreis in der Heizdecke zum Erhitzen der Decke und eine elektronische Energieversorgung, die mit dem ersten und dem zweiten induktiven Heizkreis gekoppelt ist.

Aus der US 2015/001768 A1 ist ein Verfahren zum Reparieren eines Schadens an einer Schadenszone bekannt, wobei die Schadenszone an einer thermoplastischen Folienkomponente ausgebildet ist. Bei dem Verfahren wird die thermoplastische Folie direkt durch dielektrisches Erhitzen erhitzt.

Aus der US 2008/175753 A1 ist eine Vorrichtung zur Behandlung von Objekten bekannt, umfassend eine Kammer, die konfiguriert ist, um ein zu behandelndes Objekt zu halten, wobei ein magnetisch empfindliches Mikrodrahtsensorelement mit dem Objekt verbunden ist und betreibbar ist, um einen Parameter zu erfassen, der sich auf die Temperatur des Objekts während seiner Behandlung bezieht, und einen Detektor mit einer Antennenanordnung in der Nähe der Kammer, die ein magnetisches Wechselfeld im Bereich des Sensors erzeugt und eine magnetische Antwort des Sensors als Maß für den Parameter erfasst.

Aus der DE 10 2016 209 487 A1 ist eine Induktionsheizvorrichtung bekannt, umfassend mindestens eine Spulenlage mit einer Spuleneinrichtung und einem Träger, an welchem die Spuleneinrichtung angeordnet ist, wobei die mindestens eine Spulenlage biegeflexibel ausgebildet ist. Die mindestens eine Spulenlage ist in das Strukturmaterial einer Vakuumhaube eingebettet und die Vakuumhaube ist mit der mindestens einen Spulenlage biegeflexibel ausgebildet.

Die DE 10 2011 076 463 A1 offenbart ein Reparaturverfahren gemäß dem Oberbegriff des Anspruchs 1 und eine Reparaturvorrichtung gemäß dem Oberbegriff des Anspruchs 13.

Der Erfindung liegt die Aufgabe zugrunde, ein Reparaturverfahren der eingangs genannten Art bereitzustellen, welches einfach durchführbar ist und flexibel eingesetzt werden kann.

Diese Aufgabe wird bei dem eingangs genannten Reparaturverfahren erfindungsgemäß dadurch gelöst, dass eine Temperatur gemessen wird, durch welche eine Wärmebeaufschlagung des Reparaturmaterials durch die Wärmequelle charakterisiert wird, dass die Temperatur mittels einer Steuer- und/oder Regeleinrichtung gesteuert und/oder geregelt wird, dass die Steuerung und/oder Regelung der Temperatur durch die Steuer- und/oder Regeleinrichtung gemäß einer Temperaturverlaufsvorgabe erfolgt, und dass die Temperaturverlaufsvorgabe einen Aufheizbereich und einen sich an den Aufheizbereich anschließenden Arbeitsbereich aufweist.

Das Werkstück ist beispielsweise ein Faserverbundwerkstoff-Bauteil. Es weist an dem Reparaturbereich eine Beschädigung auf.

Zur Durchführung des Reparaturverfahrens wird die Wärmequelle an dem Reparaturbereich angeordnet und durch die Magnetfelderzeugungseinrichtung induktiv erwärmt. Die Wärmequelle erwärmt wiederum das an dem Reparaturbereich des Werkstücks angeordnete Reparaturmaterial.

Die Wärmequelle wird zwischen der Magnetfelderzeugungseinrichtung und dem Reparaturbereich angeordnet. Magnetfelderzeugungseinrichtung und Wärmequelle sind getrennte Komponenten der Induktionsheizvorrichtung, welche getrennt voneinander positioniert werden können. Die Wärmequelle ist dadurch individuell an eine Oberfläche des Reparaturbereichs anpassbar. Die Wärmequelle lässt sich direkt auf der Oberfläche des Reparaturbereichs positionieren, wodurch eine verbesserte Wärmeeinbringung in den Reparaturbereich des Werkstücks erreicht wird.

Magnetfelderzeugungseinrichtung und Wärmequelle sind stofflich voneinander getrennt. Die Wärmequelle kann dadurch beispielsweise durch eine thermische Isolierlage abgeschirmt werden. Das Reparaturverfahren mit der Induktionsheizvorrichtung lässt sich dadurch besonders flexibel einsetzen und effizient durchführen.

Die Steuer- und/oder Regeleinrichtung steuert und/oder regelt die Temperatur, durch welche die Wärmebeaufschlagung des Reparaturmaterials durch die Wärmequelle charakterisiert wird. Auf diese Weise kann die Temperatur an dem Reparaturmaterial gesteuert und/oder geregelt werden.

Das Reparaturmaterial ist beispielsweise ein thermoplastisches oder ein duroplastisches Reparaturmaterial. In Abhängigkeit des verwendeten Reparaturmaterials ist zur Durchführung des Reparaturverfahrens ein unterschiedlicher zeitlicher Temperaturverlauf an dem Reparaturmaterial erforderlich.

Durch die Steuerung und/oder Regelung der Temperatur durch die Steuer- und/oder Regeleinrichtung gemäß der Temperaturverlaufsvorgabe kann das Reparaturverfahren auf einfache Weise mit unterschiedlichen Reparaturmaterialien durchgeführt werden. Dies ermöglicht einen flexiblen Einsatz des Reparaturverfahrens.

Die Temperaturverlaufsvorgabe weist einen Aufheizbereich und einen sich an den Aufheizbereich anschließenden Arbeitsbereich auf. Zur Durchführung des Reparaturverfahrens mit dem duroplastischen Reparaturmaterial wird beispielsweise ein definierter zeitlicher Temperaturverlauf innerhalb des Aufheizbereichs benötigt. Innerhalb des Arbeitsbereichs findet eine gewünschte chemische Änderung des Reparaturmaterials statt.

Insbesondere wird die Magnetfelderzeugungseinrichtung mit einem elektrischen Strom beaufschlagt, wobei der elektrische Strom und/oder eine sich durch die Strombeaufschlagung ergebende elektrische Spannung und/oder elektrische Leistung eine Steuergröße ist. Es lässt sich dadurch die Temperatur an dem Reparaturmaterial auf einfache Weise steuern und/oder regeln.

Es ist dann günstig, wenn der elektrische Strom und/oder die elektrische Spannung und/oder die elektrische Leistung durch die Steuer- und/oder Regeleinrichtung derart gesteuert wird, dass ein zeitlicher Verlauf eines Effektivwerts des elektrischen Stroms und/oder eines Effektivwerts der elektrischen Spannung und/oder eines Effektivwerts der elektrischen Leistung zumindest näherungsweise einem zeitlichen Verlauf der Temperatur entspricht. Dies ermöglicht eine einfache Steuerung der Strombeaufschlagung durch die Steuer- und/oder Regeleinrichtung, wenn der Strom, mit welchem die Magnetfelderzeugungseinrichtung beaufschlagt wird, beispielsweise ein Wechselstrom ist. Es wird dadurch eine genauere Regelung der Temperatur durch die Steuer- und/oder Regeleinrichtung ermöglicht.

Vorteilhaft ist es, wenn die Strombeaufschlagung der Magnetfelderzeugungseinrichtung für Steuerpausenzeiten deaktiviert wird und wenn die Regelung der Temperatur gemäß der Temperaturverlaufsvorgabe über die Deaktivierung der Strombeaufschlagung mit den Steuerpausenzeiten erfolgt. Dadurch lässt sich auf einfache Weise die Steuerung und/oder Regelung der Temperatur durch die Steuer- und/oder Regeleinrichtung erreichen.

Insbesondere wird im Betrieb der Induktionsheizvorrichtung durch mindestens einen Temperatursensor die Temperatur gemessen und die gemessene Temperatur an die Steuer- und/oder Regeleinrichtung übermittelt. Dadurch kann eine einfache Messung der Temperatur nahe dem Reparaturmaterial durchgeführt werden. Die Temperatur kann dann auf einfache Weise durch die Steuer- und/oder Regeleinrichtung geregelt werden.

Insbesondere ist die Temperaturverlaufsvorgabe innerhalb des Arbeitsbereichs zumindest näherungsweise konstant. Innerhalb des Arbeitsbereichs erfolgt die gewünschte chemische Änderung des Reparaturmaterials. Hierdurch kann beispielsweise auf einfache Weise die gewünschte chemische Änderung des thermoplastischen oder duroplastischen Reparaturmaterials durchgeführt werden.

Insbesondere ist für den Fall eines thermoplastischen Reparaturmaterials die Temperaturverlaufsvorgabe innerhalb des Aufheizbereichs monoton steigend und weist insbesondere eine konstante Steigung auf. Das Reparaturverfahren kann dann für den Fall des thermoplastischen Reparaturmaterials auf einfache Weise durchgeführt werden. Durch die monoton steigende Temperaturverlaufsvorgabe kann der Arbeitsbereich schnell und einfach erreicht werden.

Insbesondere ist für den Fall eines duroplastischen Reparaturmaterials die Temperaturverlaufsvorgabe innerhalb des Aufheizbereichs abschnittsweise monoton steigend und weist insbesondere abschnittsweise eine konstante Steigung auf. Dadurch kann für den Fall des duroplastischen Reparaturmaterials das Reparaturverfahren auf einfache Weise durchgeführt werden. Der Arbeitsbereich kann dann einfach und schnell erreicht werden.

Günstig ist es, wenn für den Fall eines duroplastischen Reparaturmaterials die Temperaturverlaufsvorgabe innerhalb des Aufheizbereichs einen Plateaubereich aufweist, in welchem die Temperaturverlaufsvorgabe zumindest näherungsweise konstant ist und insbesondere, wenn innerhalb des Plateaubereichs flüchtige Komponenten des duroplastischen Reparaturmaterials verdampft werden. Der Plateaubereich ist für den Fall des duroplastischen Reparaturmaterials erforderlich, um flüchtige Komponenten, wie z. B. Lösungsmittel zu verdampfen. Dadurch kann dann die gewünschte chemische Änderung des duroplastischen Reparaturmaterials innerhalb des Arbeitsbereichs erfolgen. Auf diese Weise kann das Reparaturverfahren mit dem duroplastischen Reparaturmaterial durchgeführt werden.

Insbesondere weist die Temperaturverlaufsvorgabe für den Fall eines duroplastischen Reparaturmaterials innerhalb des Aufheizbereichs ausgehend von einer Ausgangstemperatur einen Anstieg auf, wobei auf den Anstieg ein Plateaubereich folgt, in welchem die Temperaturverlaufsvorgabe zumindest näherungsweise konstant ist, und wobei auf den Plateaubereich ein weiterer Anstieg folgt. Dadurch kann das Reparaturverfahren mit dem duroplastischen Reparaturmaterial einfach durchgeführt werden.

Bei einer Ausführungsform weist die Temperaturverlaufsvorgabe einen sich an den Arbeitsbereich anschließenden Abkühlbereich auf. Innerhalb des Abkühlbereichs ist die Temperaturverlaufsvorgabe insbesondere monoton fallend und weist insbesondere eine konstante Steigung auf. Dies ermöglicht eine einfache und definierte Abkühlung des Reparaturmaterials. Hierdurch kann, falls die Wärmebeaufschlagung des Reparaturmaterials durch die Wärmequelle schwach aktiv ist, beispielsweise eine Abkühlrate des Reparaturmaterials verringert werden.

Günstig ist es, wenn ein Unterdruckbereich zwischen einer Vakuumhaube der Induktionsheizvorrichtung und dem Werkstück hergestellt wird, insbesondere ein Druck innerhalb des Unterdruckbereichs gemessen wird, und insbesondere der Druck mittels der Steuer- und/oder Regeleinrichtung gesteuert und/oder geregelt wird. Durch den Unterdruckbereich wird die Vakuumhaube gegen das Werkstück gedrückt. Die Vakuumhaube kann hierdurch einfach an dem Werkstück positioniert werden. Durch die Messung des Drucks innerhalb des Unterdruckbereichs kann mit der Steuer- und/oder Regeleinrichtung der Druck innerhalb des Unterdruckbereichs auf einfache Weise gesteuert und/oder geregelt werden.

Insbesondere ist eine Pumpleistung der Unterdruckbeaufschlagungseinrichtung eine Steuergröße, wobei die Pumpleistung durch die Steuer- und/oder Regeleinrichtung gesteuert wird. Dadurch kann der Druck innerhalb des Unterdruckbereichs auf einfache Weise durch die Steuer- und/oder Regeleinrichtung gesteuert und/oder geregelt werden.

Insbesondere wird im Betrieb der Induktionsheizvorrichtung durch mindestens einen Drucksensor der Druck gemessen und der gemessene Druck an die Steuer- und/oder Regeleinrichtung übermittelt. Durch den mindestens einen Drucksensor kann der Druck innerhalb des Unterdruckbereichs auf einfache Weise gemessen werden. Dadurch kann der Druck durch die Steuer- und/oder Regeleinrichtung auf einfache Weise geregelt werden.

Insbesondere erfolgt die Steuerung und/oder Regelung des Drucks durch die Steuer- und/oder Regeleinrichtung gemäß eines vorgegebenen Arbeitsdrucks oder eines vorgegebenen Arbeitsdruckbereichs. Dadurch kann der Druck innerhalb des Unterdruckbereichs entsprechend eines durchzuführenden Reparaturverfahrens vorgegeben werden. Dies ermöglicht einen flexiblen Einsatz des Reparaturverfahrens.

Insbesondere wird ein konstanter Abstand zwischen der Magnetfelderzeugungseinrichtung und der Wärmequelle hergestellt. Durch den konstanten Abstand kann die Wärmequelle mittels eines von der Magnetfelderzeugungseinrichtung erzeugten homogenen Magnetfelds homogen erwärmt werden. Hierdurch wird auch eine homogene Erwärmung des Reparaturmaterials ermöglicht.

Insbesondere wird eine Strombeaufschlagung der Magnetfelderzeugungseinrichtung für eine Pausenzeit deaktiviert, wobei innerhalb dieser Pausenzeit die Temperatur gemessen wird und/oder ein Druck gemessen wird. Die gemessene Temperatur und/oder der gemessene Druck werden innerhalb der Pausenzeit an die Steuer- und/oder Regeleinrichtung übermittelt. Im Betrieb der Induktionsheizvorrichtung wird durch die Magnetfelderzeugungseinrichtung ein zeitlich veränderliches elektromagnetisches Feld erzeugt, welches ursächlich für Störströme ist, die beispielsweise in einem Temperatursensor und/oder in einem Drucksensor sowie in deren Leitungen induziert werden. Innerhalb der Pausenzeit kann eine störungsarme Messung der Temperatur und/oder des Drucks durchgeführt werden. Die gemessene Temperatur und/oder der gemessene Druck kann dann innerhalb der Pausenzeit störungsarm an die Steuer- und/oder Regeleinrichtung übermittelt werden.

Insbesondere wird die Spannungsbeaufschlagung mit einer Taktfrequenz zeitlich getaktet deaktiviert und die Temperatur und/oder der Druck werden mit dieser Taktfrequenz zeitlich getaktet gemessen. Hierdurch kann auf einfache Weise eine störungsarme Messung der Temperatur und/oder des Drucks in zeitlich regelmäßigen Abständen durchgeführt werden.

Günstig ist es, wenn die Temperatur und/oder der Druck um eine erste Wartezeit zeitlich versetzt nach Beginn der Pausenzeit gemessen werden. Innerhalb der Wartezeit können Störströme abklingen, welche zu Beginn der Pausenzeit eventuell noch vorhanden sind. Dadurch kann die Genauigkeit der Messung der Temperatur und/oder des Drucks weiter verbessert werden.

Insbesondere ist eine Messung der Temperatur und/oder des Drucks um eine zweite Wartezeit zeitlich versetzt vor dem Ende der Pausenzeit abgeschlossen. Die gemessene Temperatur und/oder der gemessene Druck können dadurch störungsarm an die Steuer- und/oder Regeleinrichtung übermittelt werden.

Insbesondere wird das Reparaturmaterial in fester Form an dem Reparaturbereich angeordnet. Es lässt sich dadurch das Reparaturmaterial einfach verarbeiten und an die Geometrie des Reparaturbereichs anpassen. Das Reparaturmaterial kann dann in Lagen an dem Reparaturbereich angeordnet werden.

Bei einer Variante des Verfahrens wird zwischen der Magnetfelderzeugungseinrichtung und der Wärmequelle eine thermische Isolierlage angeordnet. Dadurch wird die thermische Abschirmung der Wärmequelle verbessert. Hierdurch kann im Betrieb der Induktionsheizvorrichtung beispielsweise eine Wärmeabstrahlung über eine dem Werkstück abgewandte Seite der Wärmequelle verringert werden. Dadurch wird die Effizienz und der Wirkungsgrad des Reparaturverfahrens mit der Induktionsheizvorrichtung erhöht.

Erfindungsgemäß ist bei der eingangs genannten Reparaturvorrichtung vorgesehen, dass der mindestens eine Temperatursensor eine Temperatur misst, durch welche eine Wärmebeaufschlagung des Reparaturmaterials durch die Wärmequelle charakterisiert wird, dass der mindestens eine Temperatursensor signalwirksam mit einer Steuer- und/oder Regeleinrichtung verbunden ist, dass die Steuer- und/oder Regeleinrichtung eine Speichereinrichtung aufweist, in der eine Temperaturverlaufsvorgabe gespeichert ist, und dass die Steuer- und/oder Regeleinrichtung die durch den mindestens einen Temperatursensor gemessene Temperatur gemäß der gespeicherten Temperaturverlaufsvorgabe steuert und/oder regelt. Die erfindungsgemäße Reparaturvorrichtung weist bereits die im Zusammenhang mit dem erfindungsgemäßen Verfahren erläuterten Vorteile auf.

Weitere vorteilhafte Ausgestaltungen der erfindungsgemäßen Reparaturvorrichtung wurden bereits im Zusammenhang mit dem erfindungsgemäßen Reparaturverfahren erläutert.

Insbesondere ist die Induktionsheizvorrichtung mit der Vakuumhaube, der Magnetfelderzeugungseinrichtung und der Wärmequelle biegeflexibel ausgebildet. Die Reparaturvorrichtung kann dann an Werkstücken mit einer gekrümmten Oberfläche eingesetzt werden.

Bei einer Ausführungsform ist zwischen der Magnetfelderzeugungseinrichtung und der Wärmequelle eine thermische Isolierlage angeordnet. Es wird dadurch der Wirkungsgrad der Induktionsheizvorrichtung erhöht.

Insbesondere ist mit der erfindungsgemäßen Reparaturvorrichtung das erfindungsgemäße Reparaturverfahren durchführbar oder wird mit dieser durchgeführt.

Insbesondere ist das erfindungsgemäße Reparaturverfahren mit der erfindungsgemäßen Reparaturvorrichtung durchführbar oder wird mit dieser durchgeführt.

Die nachfolgende Beschreibung bevorzugter Ausführungsformen dient im Zusammenhang mit den Zeichnungen der näheren Erläuterung der Erfindung.

Es zeigen:
- Figur 1: eine schematische Darstellung eines Ausführungsbeispiels einer Reparaturvorrichtung;
- Figur 2: eine Schnittansicht eines Werkstücks, an welchem ein Ausführungsbeispiel einer Reparaturvorrichtung angeordnet ist;
- Figur 3: einen vorgegebenen zeitlichen Verlauf einer Temperatur, durch welche eine Wärmebeaufschlagung eines Reparaturmaterials charakterisiert wird;
- Figur 4: einen zeitlichen Verlauf eines Effektivwerts eines Stroms, mit welchem eine Magnetfelderzeugungseinrichtung beaufschlagt wird;
- Figur 5: eine schematische Darstellung eines zeitlichen Verlaufs einer Ausführungsform einer Unterbrechung des Stroms an der Magnetfelderzeugungseinrichtung;
- Figur 6: eine schematische Darstellung eines zeitlichen Verlaufs einer weiteren Ausführungsform einer Unterbrechung des Stroms an der Magnetfelderzeugungseinrichtung;
- Figur 7: eine schematische Darstellung eines zeitlichen Verlaufs einer weiteren Ausführungsform einer Unterbrechung des Stroms an der Magnetfelderzeugungseinrichtung; und
- Figur 8: eine schematische Darstellung eines Teilbereichs eines weiteren Ausführungsbeispiels einer Reparaturvorrichtung.

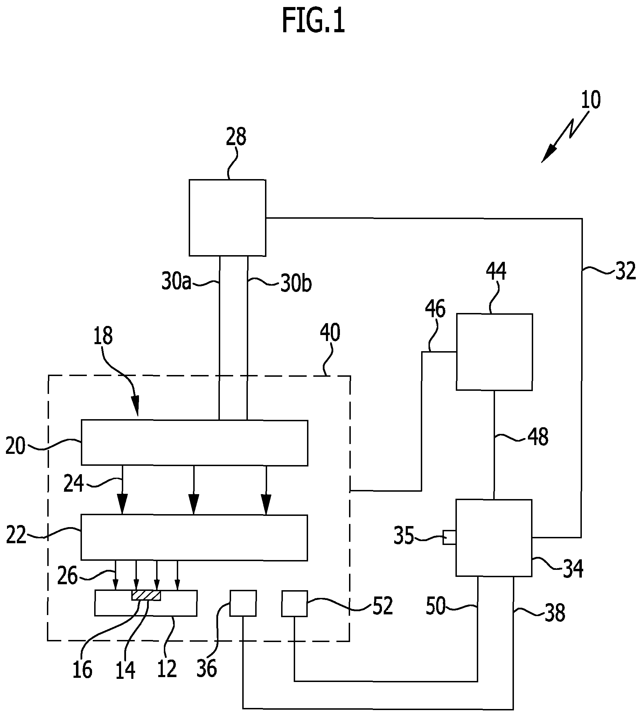

Ein Ausführungsbeispiel einer Reparaturvorrichtung, welche in Figur 1 schematisch gezeigt und dort mit 10 bezeichnet ist, umfasst als Reparaturobjekt ein Werkstück 12.

Das Werkstück 12 ist aus einem Kunststoffmaterial hergestellt. Es ist beispielsweise ein Faserverbundwerkstoff-Bauteil. Das Werkstück 12 weist einen Reparaturbereich 14 mit einer Beschädigung auf. An dem Reparaturbereich 14 ist ein Reparaturmaterial 16 angeordnet.

Das Reparaturmaterial 16 weist eine feste Form auf. Es kann alternativ hierzu auch zähflüssig mit einer großen Zeitkonstante sein.

Das Reparaturmaterial 16 umfasst insbesondere ein Reparaturharz.

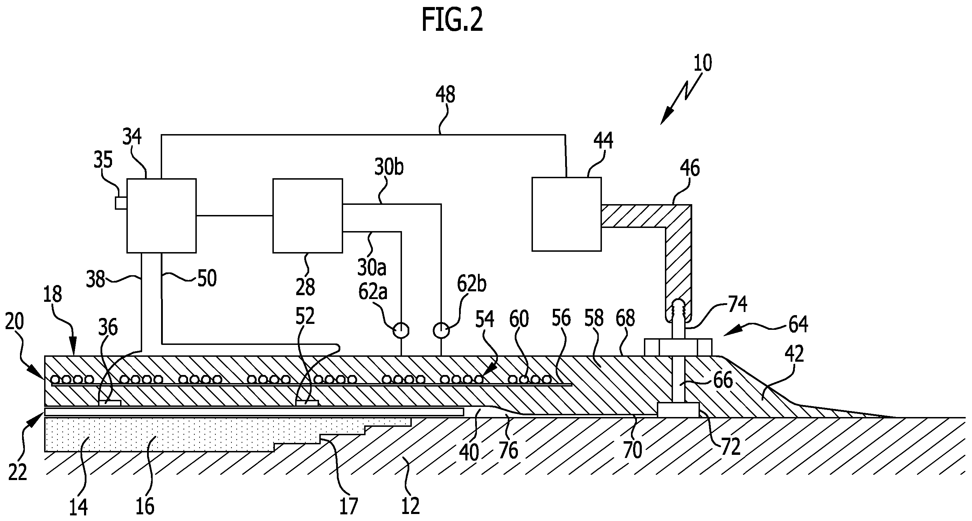

Das Reparaturmaterial 16 ist in einzelnen Lagen 17 (Figur 2) an dem Reparaturbereich 14 angeordnet.

Die Reparaturvorrichtung 10 umfasst eine Induktionsheizvorrichtung 18. Die Induktionsheizvorrichtung 18 weist eine Magnetfelderzeugungseinrichtung 20 und eine Wärmequelle 22 auf. Die Wärmequelle 22 ist zwischen der Magnetfelderzeugungseinrichtung 20 und dem Werkstück 12 angeordnet.

Die Magnetfelderzeugungseinrichtung 20 dient zur Erzeugung eines homogenen elektromagnetischen Felds 24 (angedeutet durch Pfeile), welches von der Wärmequelle 22 induktiv in Wärme 26 (angedeutet durch Pfeile) umgewandelt wird. Mit der Wärme 26 wird das Reparaturmaterial 16 beaufschlagt.

Magnetfelderzeugungseinrichtung 20 und Wärmequelle 22 sind voneinander getrennte Komponenten der Induktionsheizvorrichtung 18. Magnetfelderzeugungseinrichtung 20 und Wärmequelle 22 lassen sich dadurch getrennt voneinander positionieren.

Die Magnetfelderzeugungseinrichtung 20 ist mit einem Induktionsgenerator 28 über Leitungen 30a, 30b elektrisch wirksam verbunden. Der Induktionsgenerator 28 erzeugt einen hochfrequenten elektrischen Wechselstrom, mit welchem die Magnetfelderzeugungseinrichtung 20 beaufschlagt wird. Die Frequenz liegt bei mindestens 20 kHz und liegt typischerweise bei ca. 150 kHz.

Der Induktionsgenerator 28 ist über eine Leitung 32 signalwirksam mit einer Steuer- und/oder Regeleinrichtung 34 verbunden. Die Steuer- und/oder Regeleinrichtung 34 steuert den Wechselstrom, mit welchem die Magnetfelderzeugungseinrichtung 20 durch den Induktionsgenerator 28 beaufschlagt wird. Sie steuert beispielsweise einen Effektivwert i des Wechselstroms.

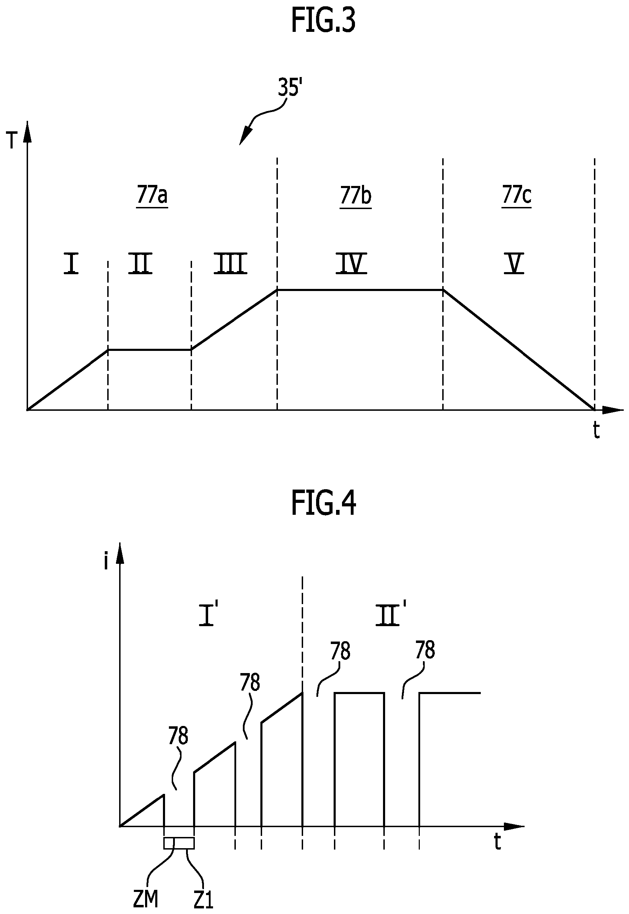

Die Steuer- und/oder Regeleinrichtung 34 umfasst eine Speichereinrichtung 35, in welcher eine Temperaturverlaufsvorgabe 35' (Figur 3) für eine Temperatur T gespeichert ist.

Der Effektivwert i des Wechselstroms, mit welchem die Magnetfelderzeugungseinrichtung 20 beaufschlagt wird, ist eine Steuergröße für eine Regelung der Temperatur T durch die Steuer- und/oder Regeleinrichtung 34. Durch die Temperatur T wird eine Wärmebeaufschlagung des Reparaturmaterials 16 durch die Wärmequelle 22 charakterisiert.

In einem Bereich der Wärmequelle 22 ist mindestens ein Temperatursensor 36 angeordnet, welcher die Temperatur T misst. Der Temperatursensor 36 ist über eine Leitung 38 signalwirksam mit der Steuer- und/oder Regeleinrichtung 34 verbunden. Auf diese Weise wird die durch den Temperatursensor 36 gemessene Temperatur T an die Steuer- und/oder Regeleinrichtung 34 übermittelt.

Die durch den Temperatursensor 36 gemessene Temperatur T ist eine Ist-Temperatur. Die Temperatur T ist eine Regelgröße, welche von der Steuer- und/oder Regeleinrichtung 34 geregelt wird. Diese steuert hierzu den Effektivwert i, welcher eine Steuergröße ist. Auf diese Weise kann eine Regelung der Temperatur T gemäß der Temperaturverlaufsvorgabe 35' (Soll-Temperatur) durchgeführt werden.

Alternativ hierzu kann es vorgesehen sein, dass ein Effektivwert einer elektrischen Wechselspannung oder ein Effektivwert einer elektrischen Leistung, welcher sich durch die Wechselstrombeaufschlagung der Magnetfelderzeugungseinrichtung 20 ergibt, eine Steuergröße für die Regelung der Temperatur T ist. Die Steuer- und/oder Regeleinrichtung 34 steuert dann den Effektivwert der elektrischen Wechselspannung oder den Effektivwert der elektrischen Leistung.

Es kann vorgesehen sein, dass ein Unterdruckbereich 40 zwischen einer Vakuumhaube 42 (Figur 2) der Induktionsheizvorrichtung 18 und dem Werkstück 12 hergestellt wird. Hierzu erfolgt eine Unterdruckbeaufschlagung des Unterdruckbereichs 40 durch eine Unterdruckbeaufschlagungseinrichtung 44. Die Unterdruckbeaufschlagungseinrichtung 44 ist beispielsweise eine Vakuumpumpe. Sie ist über eine Leitung 46 fluidwirksam mit dem Unterdruckbereich 40 verbunden.

Die Unterdruckbeaufschlagungseinrichtung 44 ist wiederum über eine Leitung 48 signalwirksam mit der Steuer- und/oder Regeleinrichtung 34 verbunden. Die Steuer- und/oder Regeleinrichtung 34 steuert beispielsweise eine Pumpleistung der Unterdruckbeaufschlagungseinrichtung 44.

Die Pumpleistung ist eine Steuergröße für eine Regelung eines Drucks P innerhalb des Unterdruckbereichs 40 durch die Steuer- und/oder Regeleinrichtung 34.

Die Steuer- und/oder Regeleinrichtung 34 ist über eine Leitung 50 signalwirksam mit einem Drucksensor 52 verbunden. Der Drucksensor 52 ist innerhalb des Unterdruckbereichs 40 angeordnet und misst dort den Druck P. Der durch den Drucksensor 52 gemessene Druck P wird über die Leitung 50 an die Steuer und/oder Regeleinrichtung 34 übermittelt.

Der durch den Drucksensor 52 gemessene Druck P ist ein Ist-Druck. Die Steuer- und/oder Regeleinrichtung 34 regelt den Druck P innerhalb des Unterdruckbereichs 40. Der Druck P ist eine Regelgröße.

Zur Regelung des Drucks P steuert die Steuer- und/oder Regeleinrichtung 34 die Pumpleistung der Unterdruckbeaufschlagungseinrichtung 44, welche eine Steuergröße ist. Auf diese Weise kann eine Regelung des Drucks P gemäß einem vorgegebenen Soll-Druck durchgeführt werden.

Die Steuer- und/oder Regeleinrichtung 34 verwendet beispielsweise eine PID-Regelung oder eine Fuzzy-Logik zur Angleichung eines gemessenen Ist-Werts einer Größe an einen vorgegebenen Soll-Wert.

Durch den Unterdruckbereich 40 wird ein konstanter Abstand zwischen der Magnetfelderzeugungseinrichtung 20 und der Wärmequelle 22 hergestellt. Es wird ferner ein konstanter Abstand zwischen der Wärmequelle 22 und dem Werkstück 12 hergestellt.

Bei dem in Figur 2 gezeigten Ausführungsbeispiel ist die Vakuumhaube 42 an dem Werkstück 12 positioniert. Zwischen dem Reparaturmaterial 16 an dem Reparaturbereich 14 und der Vakuumhaube 42 ist die Wärmequelle 22 angeordnet. Diese ist ein loser Bestandteil der Induktionsheizvorrichtung 18.

Die Magnetfelderzeugungseinrichtung 20 der Induktionsheizvorrichtung 18 umfasst eine Spuleneinrichtung 54 mit einem Träger 56. Die Spuleneinrichtung 54 ist in ein Strukturmaterial 58 der Vakuumhaube 42 eingebettet.

Die Spuleneinrichtung 54 ist mit der Vakuumhaube 42 als Ganzes biegeflexibel ausgebildet.

Der Träger 56 ist aus einem elektrisch isolierenden Material hergestellt. Er ist beispielsweise eine Faserstruktur und ein textiles Gebilde, wie ein Gewebe oder Gewirke.

An dem Träger 56 ist eine stromtragende Hochfrequenzlitze 60 angeordnet.

Die Hochfrequenzlitze 60 dient zum Tragen eines hochfrequenten Wechselstroms. Sie ist ein Drahtbündel von Einzeldrähten, welche jeweils durch eine Isolierung gegeneinander elektrisch isoliert sind.

Die Einzeldrähte des Drahtbündels der Hochfrequenzlitze 60 sind beim Betrieb der Induktionsheizvorrichtung 18 über die Leitungen 30a, 30b mit dem Induktionsgenerator 28 elektrisch wirksam verbunden. Die Hochfrequenzlitze 60 weist dazu entsprechende Anschlüsse 62a, 62b auf, welche in einem Außenbereich der Vakuumhaube 42 angeordnet sind.

Die Spuleneinrichtung 54 ist so ausgebildet, dass über eine Fläche der Spuleneinrichtung 54 eine homogene Feldverteilung des elektromagnetischen Felds 24 erreicht wird.

Bezüglich weiterer Details der Ausbildung der Spuleneinrichtung 54 und der Hochfrequenzlitze 60 wird auf die DE 10 2013 111 266 A1 und auf die DE 20 2015 100 080 U1 des gleichen Anmelders verwiesen. Hierauf wird ausdrücklich und vollinhaltlich Bezug genommen.

Das Strukturmaterial 58 der Vakuumhaube 42 ist insbesondere biegeflexibel. Es ist insbesondere gasdicht und/oder elektrisch isolierend. Das Strukturmaterial 58 ist beispielsweise ein Silikonmaterial.

Die Vakuumhaube 42 umfasst eine Kanaleinrichtung 64 mit einem Zufuhrkanal 66, welcher von einer Oberseite 68 an eine Unterseite 70 der Vakuumhaube 42 verläuft.

Der Zufuhrkanal 66 mündet an der Unterseite 70 in einen Verteiler 72 ein. Mit dem Verteiler 72 sind Kanäle fluidwirksam verbunden, wobei die Kanäle insbesondere an der Unterseite 70 verlaufen und/oder zu der Unterseite 70 hin offen sind.

An einer Einmündung des Zufuhrkanals 66 in die Oberseite 68 ist ein Anschluss 74 angeordnet. Der Anschluss 74 ist über die Leitung 46 fluidwirksam mit der Unterdruckbeaufschlagungseinrichtung 44 verbunden. Auf diese Weise kann der Unterdruckbereich 40 zwischen einer Seite 76 des Werkstücks 12 und der Unterseite 70 der Vakuumhaube 42 hergestellt werden.

Die Wärmequelle 22 ist beabstandet zu der Spuleneinrichtung 54 positioniert und elektrisch von ihr über das Strukturmaterial 58 getrennt.

Die Wärmequelle 22 ist elektrisch leitfähig und insbesondere biegeflexibel ausgebildet. Sie ist beispielsweise ein dünnes Metallblech oder Metallnetz.

Die Wärmequelle 22 wird mittels des durch die Magnetfelderzeugungseinrichtung 20 erzeugten homogenen elektromagnetischen Felds 24 homogen erwärmt.

Der Temperatursensor 36 ist an der Unterseite 70 der Vakuumhaube 42 positioniert. Der Temperatursensor 36 kann zumindest teilweise in das Strukturmaterial 58 der Vakuumhaube 42 eingebettet sein. Die Leitung 38, welche in einem signalwirksamen Kontakt mit dem Temperatursensor 36 steht, ist insbesondere durch das Strukturmaterial 58 der Vakuumhaube 42 nach außen geführt.

Der Drucksensor 52 ist innerhalb des Unterdruckbereichs 40 angeordnet. Er ist analog zu dem Temperatursensor 36 an der Unterseite 70 der Vakuumhaube 42 angeordnet. Die Leitung 50, welche mit dem Drucksensor 52 signalwirksam verbunden ist, ist insbesondere über das Strukturmaterial 58 der Vakuumhaube 42 nach außen geführt.

Bezüglich weiterer Details der Induktionsheizvorrichtung 18 und der Vakuumhaube 42 wird auf die nicht vorveröffentlichte deutsche Patentanmeldung Nr. 10 2016 209 487.4 vom 31. Mai 2016 des gleichen Anmelders verwiesen. Hierauf wird ausdrücklich und vollinhaltlich Bezug genommen.

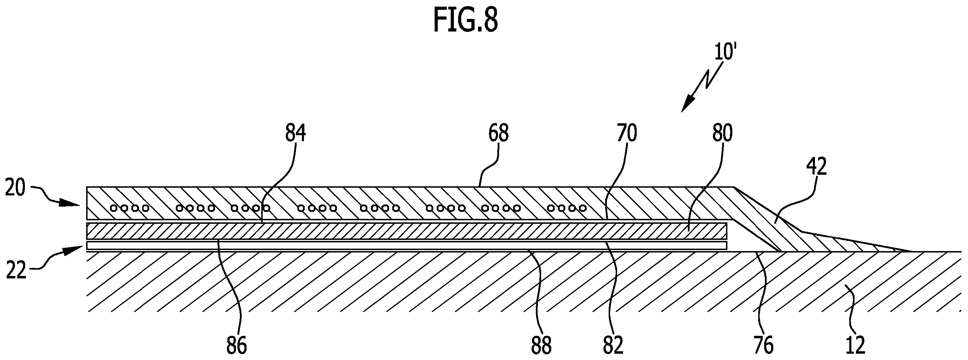

Ein weiteres Ausführungsbeispiel einer Reparaturvorrichtung 10', von welcher in Figur 8 ein Teilbereich gezeigt ist, umfasst mindestens eine thermische Isolierlage 80. Die Reparaturvorrichtung 10' ist grundsätzlich gleichartig ausgebildet und weist grundsätzlich die gleiche Funktionsweise auf wie die vorstehend beschriebene Reparaturvorrichtung 10. Komponenten der Reparaturvorrichtung 10', welche mit Komponenten der Reparaturvorrichtung 10 identisch sind, sind nachfolgend mit denselben Bezugszeichen belegt. Für diese Komponenten gilt die vorstehende Beschreibung weiterhin.

Die thermische Isolierlage 80 ist zwischen der Magnetfelderzeugungseinrichtung 20 und der Wärmequelle 22 positioniert. Die thermische Isolierlage 80 ist beispielsweise zwischen der Unterseite 70 der Vakuumhaube 42 und einer der Unterseite 70 zugewandten Seite 82 der Wärmequelle 22 angeordnet.

Die thermische Isolierlage 80 ist insbesondere flächig ausgebildet. Die thermische Isolierlage 80 weist eine erste Seite 84 und eine zu der ersten Seite 84 gegenüberliegende zweite Seite 86 auf. In dem Ausführungsbeispiel gemäß Figur 8 ist die erste Seite 84 der Unterseite 70 der Vakuumhaube 42 zugewandt. Die zweite Seite 86 ist in dem gezeigten Ausführungsbeispiel der Seite 82 der Wärmequelle 22 zugewandt.

Die erste Seite 84 und/oder die zweite Seite 86 sind insbesondere eben ausgebildet.

Insbesondere kontaktiert die erste Seite 84 der thermischen Isolierlage 80 die Unterseite 70 der Vakuumhaube 42. Die zweite Seite 86 kontaktiert insbesondere die Seite 82 der Wärmequelle 22.

Die Wärmequelle 22 ist zwischen der zweiten Seite 86 und der Seite 76 des Werkstücks 12, welche der Unterseite 70 der Vakuumhaube 42 zugewandt ist, angeordnet.

Eine zu der Seite 82 gegenüberliegende Seite 88 der Wärmequelle 22 ist der Seite 76 des Werkstücks 12 zugewandt. Die Seite 88 der Wärmequelle 22 kontaktiert insbesondere die Seite 76 des Werkstücks 12. Die Seite 82 der Wärmequelle 22 kontaktiert insbesondere die zweite Seite 86 der thermischen Isolierlage 80.

Die thermische Isolierlage 80 ist aus einem elektrischen Isolatormaterial hergestellt. Das Material, aus welchem die thermische Isolierlage 80 hergestellt ist, weist eine geringe Wärmeleitfähigkeit auf. Das Material weist beispielsweise eine geringere Wärmeleitfähigkeit als das Strukturmaterial 58 der Vakuumhaube 42 auf. Die thermische Isolierlage 80 ist beispielsweise aus einem wärmedämmenden Kunststoff hergestellt.

Im Betrieb der Reparaturvorrichtung 10' kann durch die thermische Isolierlage 80 eine Wärmeabstrahlung der Wärmequelle 22 in Richtung der Oberseite 68 der Vakuumhaube 42 reduziert werden. Hierdurch wird der Wirkungsgrad der Induktionsheizvorrichtung 18 und der Reparaturvorrichtung 10' erhöht.

Ein Reparaturverfahren mit der Reparaturvorrichtung 10 funktioniert wie folgt:
Zunächst wird das Werkstück 12 an dem Reparaturbereich 14 mit dem Reparaturmaterial 16 versehen. Hierzu wird das Reparaturmaterial beispielsweise in fester Form zugeschnitten und in Lagen 17 an dem Reparaturbereich 14 angeordnet. Das Reparaturmaterial 16 kann sich später durch Erwärmung stoffschlüssig mit einem Strukturmaterial des Werkstücks 12 verbinden. Hierdurch kann die Beschädigung am Reparaturbereich 14 des Werkstücks 12 wieder hergestellt werden.

In einem nächsten Schritt wird die Wärmequelle 22 auf der Seite 76 des Werkstücks 12 oberhalb des Reparaturbereichs 14 angeordnet. Die Vakuumhaube 42 wird mit ihrer Unterseite 70 über die Wärmequelle 22 gelegt, so dass sich die Spuleneinrichtung 54 oberhalb der Wärmequelle 22 befindet. Die Begrenzungen der Unterseite 70 der Vakuumhaube 42 ragen über die Begrenzungen der Wärmequelle 22 hinaus.

Die Wärmequelle 22 wird beispielsweise getrennt von der Vakuumhaube 42 an dem Werkstück 12 angeordnet. Anschließend wird die Vakuumhaube 42 an der Wärmequelle 22 positioniert. Auf diese Weise lässt sich die Wärmequelle 22 insbesondere zwischen der Unterseite 70 der Vakuumhaube 42 und der Seite 76 des Werkstücks 12 anordnen.

Im Fall der Reparaturvorrichtung 10', welche die zusätzliche thermische Isolierlage 80 aufweist, wird insbesondere zunächst die Wärmequelle 22 an der Seite 76 des Werkstücks 12 angeordnet. Die thermische Isolierlage 80 wird anschließend beispielsweise mit ihrer zweiten Seite 86 an der dem Werkstück 12 abgewandten Seite 88 der Wärmequelle 22 angeordnet. Die Vakuumhaube 42 wird anschließend an der thermischen Isolierlage 80 angeordnet, sodass beispielsweise die Unterseite 70 der Vakuumhaube 42 der ersten Seite 84 der thermischen Isolierlage 80 zugewandt ist. Auf diese Weise wird die thermische Isolierlage 80 beispielsweise zwischen der Unterseite 70 der Vakuumhaube 42 und der Seite 82 der Wärmequelle 22 positioniert.

Mittels der Unterdruckbeaufschlagungseinrichtung 44 wird zwischen der Vakuumhaube 42 und dem Werkstück 12 der Unterdruckbereich 40 hergestellt. Aufgrund des Unterdruckbereichs 40 wird die Unterseite 70 der Vakuumhaube 42 gegen die Seite 76 des Werkstücks 12 gedrückt. Die Unterseite 70 wird auch gegen die Wärmequelle 22 gedrückt, welche wiederum gegen die Seite 76 des Werkstücks 12 gedrückt wird. Auf diese Weise wird ein konstanter Abstand zwischen der Magnetfelderzeugungseinrichtung 20 und der Wärmequelle 22 hergestellt. Ferner entsteht ein konstanter Abstand zwischen der Wärmequelle 22 und den Lagen 17 des Reparaturmaterials 16.

Durch den Induktionsgenerator 28 wird ein elektrischer Wechselstrom erzeugt, mit welchem die Spuleneinrichtung 54 der Magnetfelderzeugungseinrichtung 20 beaufschlagt wird. Durch den Wechselstrom an der Spuleneinrichtung 54 entsteht ein homogenes elektromagnetisches Wechselfeld 24. Aufgrund dieses homogenen elektromagnetischen Wechselfelds 24 werden Ströme in der Wärmequelle 22 induziert, wodurch sich diese homogen erwärmt. Die Wärmequelle 22 erwärmt wiederum das Reparaturmaterial 16, welches unterhalb der Wärmequelle 22 angeordnet ist.

Durch den konstanten Abstand zwischen der Magnetfelderzeugungseinrichtung 20 und der Wärmequelle 22 wird die Wärmequelle 22 homogen erwärmt. Hierdurch werden wiederum die Lagen 17 des Reparaturmaterials 16 homogen erwärmt.

Die biegeflexible Ausbildung der Induktionsheizvorrichtung 18 mit der Wärmequelle 22 ermöglicht eine homogene Erwärmung der Lagen 17 des Reparaturmaterials 16 auch dann, falls der Reparaturbereich 14 und/oder die Seite 76 eine gekrümmte Oberfläche aufweist.

Der Drucksensor 52 misst den Druck P (Ist-Druck) innerhalb des Unterdruckbereichs 40. Der gemessene Druck P wird an die Steuer- und/oder Regeleinrichtung 34 übermittelt. Die Steuer- und/oder Regeleinrichtung 34 regelt den Druck P innerhalb des Unterdruckbereichs 40.

An der Steuer- und/oder Regeleinrichtung 34 kann der Soll-Druck vorgegeben werden, gemäß welchem der Druck P durch die Steuer- und/oder Regeleinrichtung 34 innerhalb des Unterdruckbereichs 40 geregelt wird. Hierzu steuert die Steuer- und/oder Regeleinrichtung 34 beispielsweise die Pumpleistung der Unterdruckbeaufschlagungseinrichtung 44.

Der vorgegebene Soll-Druck entspricht beispielsweise einem für das Reparaturverfahren benötigten Arbeitsdruck.

Der Temperatursensor 36 misst die Temperatur T (Ist-Temperatur). Die gemessene Temperatur T wird an die Steuer- und/oder Regeleinrichtung 34 übermittelt. Die Steuer- und/oder Regeleinrichtung 34 regelt die Temperatur T, durch welche die Wärmebeaufschlagung des Reparaturmaterials 16 durch die Wärmequelle 22 charakterisiert wird.

An der Steuer- und/oder Regeleinrichtung 34 kann die Soll-Temperatur vorgegeben werden, an welche die Temperatur T durch die Steuer- und/oder Regeleinrichtung 34 angeglichen wird.

Hierzu steuert die Steuer- und/oder Regeleinrichtung 34 den Effektivwert i des Wechselstroms, mit welchem die Spuleneinrichtung 54 der Magnetfelderzeugungseinrichtung 20 beaufschlagt wird.

Es ist vorgesehen, dass an der Steuer- und/oder Regeleinrichtung 34 die Temperaturverlaufsvorgabe 35' für die Soll-Temperatur gespeichert wird, gemäß welcher die Temperatur T durch die Steuer- und/oder Regeleinrichtung 34 geregelt wird.

Eine Änderung des Effektivwerts i des Wechselstroms durch die Steuer- und/oder Regeleinrichtung 34 bewirkt eine Änderung der induktiven Erwärmung der Wärmequelle 22. Beispielsweise führt eine Erhöhung des Effektivwerts i zu einer stärkeren induktiven Erwärmung und eine Verringerung des Effektivwerts i zu einer schwächeren induktiven Erwärmung der Wärmequelle 22.

Eine Änderung des Effektivwerts i durch die Steuer- und/oder Regeleinrichtung 34 führt zumindest näherungsweise zu einer instantanen Änderung einer Temperatur der Wärmequelle 22.

Der Effektivwert i wird durch die Steuer- und/oder Regeleinrichtung 34 derart gesteuert, dass ein zeitlicher Verlauf des Effektivwerts i zumindest näherungsweise dem zeitlichen Verlauf der gemessenen Temperatur T entspricht. Hierzu erfolgt eine hinreichend langsame Anpassung des Effektivwerts i an die Temperaturverlaufsvorgabe 35'.

Alternativ oder zusätzlich kann es vorgesehen sein, dass die Strombeaufschlagung der Magnetfelderzeugungseinrichtung 20 durch die Steuer- und/oder Regeleinrichtung 34 für Steuerpausenzeiten deaktiviert wird. Die Regelung der Temperatur T gemäß der Temperaturverlaufsvorgabe 35' erfolgt dann über die Deaktivierung der Strombeaufschlagung mit den Steuerpausenzeiten. Die Deaktivierung der Strombeaufschlagung erfolgt insbesondere mit hinreichend kurzen Steuerpausenzeiten und insbesondere mit einer hinreichend hohen Taktfrequenz, so dass eine genaue Regelung der Temperatur T gemäß der Temperaturverlaufsvorgabe 35' durch die Steuer- und/oder Regeleinrichtung 34 ermöglicht wird.

Auf diese Weise kann ein zeitlicher Temperaturverlauf für die Temperatur T gemäß der Temperaturverlaufsvorgabe 35' für das Reparaturverfahren in Abhängigkeit des verwendeten Reparaturmaterials 16 vorgegeben werden.

Die Temperaturverlaufsvorgabe 35' weist einen Aufheizbereich 77a und einen sich an den Aufheizbereich 77a anschließenden Arbeitsbereich 77b auf. Auf den Arbeitsbereich 77b folgt ein Abkühlbereich 77c. Innerhalb des Arbeitsbereichs 77b findet die gewünschte chemische Änderung des verwendeten Reparaturmaterials 16 statt.

Das Reparaturmaterial 16 ist beispielsweise ein thermoplastisches Reparaturmaterial 16, welches bei einer bestimmten Arbeitstemperatur verformbar ist. In diesem Fall wird eine Temperaturverlaufsvorgabe 35' vorgegeben, welche innerhalb des Aufheizbereichs 77a ausgehend von einer Ausgangstemperatur (beispielsweise Raumtemperatur) zumindest näherungsweise einen linearen Anstieg aufweist, bis die Arbeitstemperatur erreicht ist. Innerhalb des Arbeitsbereichs 77b ist der vorgegebene zeitliche Temperaturverlauf zeitlich konstant und entspricht der Arbeitstemperatur. Der Arbeitsbereich 77b weist in Abhängigkeit der Spezifikation des thermoplastischen Reparaturmaterials 16 eine zeitliche Länge von einigen Minuten bis zu einigen Stunden auf. Anschließend findet innerhalb des Abkühlbereichs 77c eine Abkühlung des Reparaturmaterials 16 auf die Ausgangstemperatur statt.

Alternativ hierzu kann als Reparaturmaterial 16 ein duroplastisches Reparaturmaterial 16 eingesetzt werden. Bei einem duroplastischen Reparaturmaterial 16 erfolgt eine chemische Stoffumwandlung in Abhängigkeit eines spezifischen zeitlichen Temperaturverlaufs. Zur Durchführung des Reparaturverfahrens mit dem duroplastischen Reparaturmaterial ist es erforderlich, dass die Temperaturverlaufsvorgabe 35' innerhalb des Aufheizbereichs 77a einen spezifischen Anstieg aufweist.

Ein Beispiel einer solchen Temperaturverlaufsvorgabe 35' für die Temperatur T ist in Abhängigkeit der Zeit ist schematisch in Figur 3 dargestellt.

Die Temperaturverlaufsvorgabe 35' weist einen ersten Bereich I auf, in welchem die Temperatur T monoton steigend ist. Die Temperatur T weist im ersten Bereich I eine konstante Steigung auf.

In einem auf den ersten Bereich I folgenden zweiten Bereich II weist die Temperaturverlaufsvorgabe 35' einen Plateaubereich auf, in welchem die Temperatur T zeitlich konstant ist. Für eine zeitliche Dauer des Plateaubereichs werden flüchtige Komponenten des duroplastischen Reparaturmaterials 16 verdampft. Dies ist erforderlich, um später die gewünschte chemische Änderung des duroplastischen Reparaturmaterials durchzuführen.

Auf den zweiten Bereich II folgt ein dritter Bereich III, in welchem die Temperatur T in Abhängigkeit der Zeit analog zu dem Bereich I monoton ansteigt, bis die Temperatur des Arbeitsbereichs 77b erreicht ist.

Die Bereiche I bis III entsprechen dem Aufheizbereich 77a der Temperaturverlaufsvorgabe 35'. Ein auf den dritten Bereich III folgender vierter Bereich IV entspricht dem Arbeitsbereich 77b.

Innerhalb des vierten Bereichs IV ist die Temperaturverlaufsvorgabe 35' für die Temperatur T zeitlich konstant. In Abhängigkeit der Spezifikation des duroplastischen Reparaturmaterials 16 beträgt eine zeitliche Dauer des Bereichs IV einige Minuten oder bis zu einigen Stunden.

An den vierten Bereich IV schließt sich ein fünfter Bereich V an, welcher dem Abkühlbereich 77c der Temperaturverlaufsvorgabe 35' entspricht. Innerhalb des fünften Bereichs V wird das Reparaturmaterial 16 auf die Ausgangstemperatur abgekühlt. In dem fünften Bereich V ist die Temperatur T monoton fallend. Die Temperatur T weist im fünften Bereich V insbesondere eine konstante Steigung auf.

Die Temperaturverlaufsvorgabe 35' wird innerhalb des fünften Bereichs V beispielsweise derart gewählt, dass die Wärmebeaufschlagung des Reparaturmaterials 16 durch die Wärmequelle 22 noch schwach aktiv ist. Dadurch ist es möglich, eine Abkühlrate des Reparaturmaterials 16 zu definieren. Dadurch kann die Abkühlrate des Reparaturmaterials 16 beispielsweise gegenüber einer Abkühlrate ohne zusätzliche Wärmebeaufschlagung verringert werden.

Im Anschluss an die Wärmebeaufschlagung des Reparaturmaterials 16 gemäß der Temperaturverlaufsvorgabe 35' wird das Reparaturverfahren abgeschlossen. Hierzu werden in einem letzten Schritt die Komponenten der Induktionsheizvorrichtung 18 deaktiviert und die Vakuumhaube 42 sowie die Wärmequelle 22 von dem Werkstück 12 entfernt.

Im Betrieb der Induktionsheizvorrichtung 18 wird durch die Magnetfelderzeugungseinrichtung 20 ein zeitlich veränderliches elektromagnetisches Feld 24 erzeugt. Dieses elektromagnetische Feld 24 ist ursächlich für Störströme, welche in dem Temperatursensor 36, dem Drucksensor 52 sowie in den Leitungen 38 und 50 induziert werden. Durch die Störströme wird eine Messung der Temperatur T durch den Temperatursensor 36 und des Drucks P durch den Drucksensor 52 verfälscht.

Um eine störungsarme Erhebung von Messwerten durch Sensoren innerhalb des elektromagnetischen Felds 24 zu ermöglichen, kann es vorgesehen sein, dass für die Durchführung einer Messung die Beaufschlagung der Magnetfelderzeugungseinrichtung 20 mit dem Wechselstrom für eine Pausenzeit Z1 deaktiviert wird. Diese Deaktivierung der Strombeaufschlagung führt innerhalb der Pausenzeit Z1 zu einem Abklingen des elektromagnetischen Felds 24 und ebenso zu einem Abklingen der Störströme.

Die Messung der Temperatur T durch den Temperatursensor 36 und des Drucks P durch den Drucksensor 52 erfolgt während der Pausenzeit Z1, wenn die Strombeaufschlagung der Magnetfelderzeugungseinrichtung 20 deaktiviert ist. Auf diese Weise kann eine störungsarme Messung der Temperatur T und des Drucks P durchgeführt werden.

Ein beispielhafter zeitlicher Verlauf des Effektivwerts i des Wechselstroms an der Magnetfelderzeugungseinrichtung 20 ist in Figur 4 in Abhängigkeit der Zeit schematisch dargestellt. Der zeitliche Verlauf weist einen ersten Bereich I' auf, in welchem der Effektivwert i ansteigt. Auf den ersten Bereich I' folgt ein zweiter Bereich II', in welchem der Effektivwert i konstant ist. Der erste Bereich I' korrespondiert, zumindest näherungsweise, zu einem zeitlich linearen Anstieg der Temperatur T. Der zweite Bereich II' korrespondiert, zumindest näherungsweise, zu einem zeitlich konstanten Verlauf der Temperatur T.

Der zeitliche Verlauf des Effektivwerts i weist Unterbrechungen 78 auf. Eine zeitliche Dauer dieser Unterbrechungen 78 entspricht jeweils der Pausenzeit Z1. Innerhalb der Pausenzeit Z1 beträgt der Effektivwert i Null. Während der Pausenzeit Z1 wird die Messung durchgeführt, wobei die Durchführung der Messung innerhalb der Messzeit Zm geschieht. Die Messzeit Zm entspricht zumindest näherungsweise der Pausenzeit Z1.

Ein Beginn der Pausenzeit Z1 entspricht zumindest näherungsweise einem Beginn der Messzeit Zm. Ein Ende der Pausenzeit Z1 entspricht zumindest näherungsweise einem Ende der Messzeit Zm.

Nach dem Ende der Pausenzeit Z1 wird die Strombeaufschlagung der Magnetfelderzeugungseinrichtung 20 fortgesetzt.

Die Pausenzeit Z1 ist insbesondere derart kurz, dass während der Deaktivierung der Strombeaufschlagung sich die gemessene Temperatur T zumindest näherungsweise nicht verändert.

Beispielsweise wird die Strombeaufschlagung der Magnetfelderzeugungseinrichtung 20 mit einer Taktfrequenz zeitlich getaktet deaktiviert. In diesem Fall ist eine Zeitdauer zwischen aufeinanderfolgenden Unterbrechungen 78 konstant. Es wird dann eine mit dieser Taktfrequenz zeitlich getaktete Messung der Temperatur T und des Drucks P zu den jeweiligen Pausenzeiten Z1 der Unterbrechungen 78 durchgeführt.

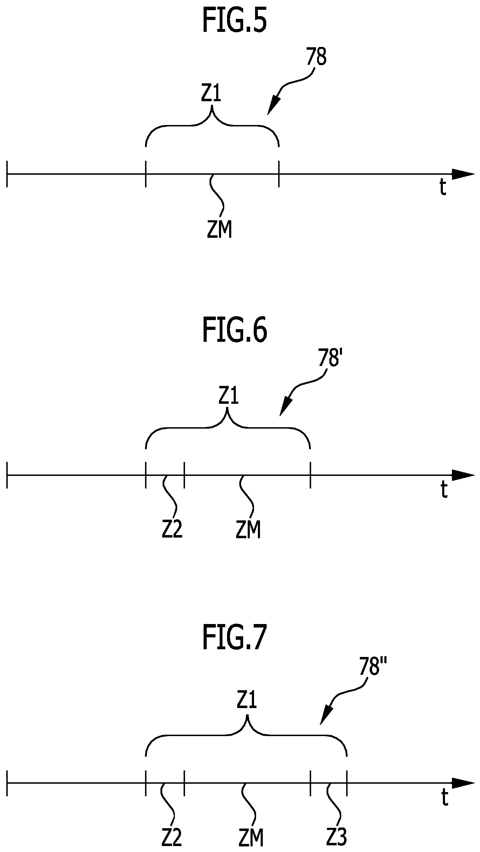

Bei der Unterbrechung 78 entspricht die zeitliche Dauer der Pausenzeit Z1 derjenigen der Messzeit Zm (Figur 5).

Bei einer weiteren Ausführungsform einer Unterbrechung 78' ist es vorgesehen, dass die Messung um eine erste Wartezeit Z2 zeitlich versetzt nach Beginn der Pausenzeit Z1 erfolgt (Figur 6). Die Messzeit Zm beginnt dann erst nach Ablauf der ersten Wartezeit Z2 nach Beginn der Pausenzeit Z1. Die Pausenzeit Z1 entspricht einer Summe der ersten Wartezeit Z2 und der Messzeit Zm.

Während der ersten Wartezeit Z2 können eventuelle Störströme, welche zum Zeitpunkt der Deaktivierung der Strombeaufschlagung noch vorhanden sind, abklingen. Auf diese Weise wird die Genauigkeit der Messung weiter verbessert.

Bei einer weiteren Ausführungsform einer Unterbrechung 78" (Figur 7) erfolgt die Messung ebenfalls nach Beginn der Pausenzeit Z1 nach Ablauf der ersten Wartezeit Z2. Allerdings endet die Messzeit Zm um eine zweite Wartezeit Z3 zeitlich versetzt vor dem Ende der Pausenzeit Z1. Die Pausenzeit Z1 entspricht einer Summe aus der ersten Wartezeit Z2, der Messzeit Zm und der zweiten Wartezeit Z3.

Auf diese Weise kann die Messung um die zweite Wartezeit Z3 zeitlich versetzt vor dem Ende der Pausenzeit Z1 abgeschlossen werden. Es werden dadurch Störungen bei einer Übermittlung von Messwerten an die Steuer- und/oder Regeleinrichtung 34 verhindert oder zumindest vermieden.

### Bezugszeichenliste

- i: Effektivwert
- T: Temperatur
- P: Druck
- Z1: Pausenzeit
- Z2: erste Wartezeit
- Z3: zweite Wartezeit
- Zm: Messzeit
- I: erster Bereich
- II: zweiter Bereich
- III: dritter Bereich
- IV: vierter Bereich
- V: fünfter Bereich
- I': erster Bereich
- II': zweiter Bereich
- 10: Reparaturvorrichtung
- 10': Reparaturvorrichtung
- 12: Werkstück
- 14: Reparaturbereich
- 16: Reparaturmaterial
- 17: Lage
- 18: Induktionsheizvorrichtung
- 20: Magnetfelderzeugungseinrichtung
- 22: Wärmequelle
- 24: elektromagnetisches Feld
- 26: Wärme
- 28: Induktionsgenerator
- 30a: Leitung
- 30b: Leitung
- 32: Leitung
- 34: Steuer- und/oder Regeleinrichtung
- 35: Speichereinrichtung
- 35': Temperaturverlaufsvorgabe
- 36: Temperatursensor
- 38: Leitung
- 40: Unterdruckbereich
- 42: Vakuumhaube
- 44: Unterdruckbeaufschlagungseinrichtung
- 46: Leitung
- 48: Leitung
- 50: Leitung
- 52: Drucksensor
- 54: Spuleneinrichtung
- 56: Träger
- 58: Strukturmaterial
- 60: Hochfrequenzlitze
- 62a: Anschluss
- 62b: Anschluss
- 64: Kanaleinrichtung
- 66: Zufuhrkanal
- 68: Oberseite
- 70: Unterseite
- 72: Verteiler
- 74: Anschluss
- 76: Seite
- 77a: Aufheizbereich
- 77b: Arbeitsbereich
- 77c: Abkühlbereich
- 78: Unterbrechung
- 78': Unterbrechung
- 78": Unterbrechung
- 80: thermische Isolierlage
- 82: Seite
- 84: erste Seite
- 86: zweite Seite
- 88: Seite

## Patentansprüche

1. Reparaturverfahren für ein Werkstück (12) aus einem Kunststoffmaterial, wobei eine Induktionsheizvorrichtung (18) an einem Reparaturbereich (14) des Werkstücks (12) positioniert wird, die Induktionsheizvorrichtung (18) eine Magnetfelderzeugungseinrichtung (20) und eine Wärmequelle (22) umfasst, wobei die Magnetfelderzeugungseinrichtung (20) und die Wärmequelle (22) getrennte Komponenten der Induktionsheizvorrichtung (18) sind, welche getrennt voneinander positioniert werden können, die Wärmequelle (22) zwischen der Magnetfelderzeugungseinrichtung (20) und dem Reparaturbereich (14) angeordnet wird, an dem Reparaturbereich (14) ein Reparaturmaterial (16) positioniert wird, das Reparaturmaterial (16) über die an dem Reparaturbereich (14) angeordnete Wärmequelle (22) erwärmt wird, und die Wärmequelle (22) durch die Magnetfelderzeugungseinrichtung (20) induktiv erwärmt wird, **dadurch gekennzeichnet, dass** eine Temperatur (T) gemessen wird, durch welche eine Wärmebeaufschlagung des Reparaturmaterials (16) durch die Wärmequelle (22) charakterisiert wird, dass die Temperatur (T) mittels einer Steuer- und/oder Regeleinrichtung (34) gesteuert und/oder geregelt wird, dass die Steuerung und/oder Regelung der Temperatur (T) durch die Steuer- und/oder Regeleinrichtung (34) gemäß einer Temperaturverlaufsvorgabe (35') erfolgt, und dass die Temperaturverlaufsvorgabe (35') einen Aufheizbereich (77a) und einen sich an den Aufheizbereich (77a) anschließenden Arbeitsbereich (77b) aufweist.

2. Reparaturverfahren nach Anspruch 1, **dadurch gekennzeichnet, dass** die Magnetfelderzeugungseinrichtung (20) mit einem elektrischen Strom beaufschlagt wird, und dass der elektrische Strom und/oder eine sich durch die Strombeaufschlagung ergebende elektrische Spannung und/oder elektrische Leistung eine Steuergröße ist, und insbesondere
**dadurch gekennzeichnet, dass** der elektrische Strom und/oder die elektrische Spannung und/oder die elektrische Leistung durch die Steuer- und/oder Regeleinrichtung (34) derart gesteuert wird, dass ein zeitlicher Verlauf eines Effektivwerts (i) des elektrischen Stroms und/oder eines Effektivwerts der elektrischen Spannung und/oder eines Effektivwerts der elektrischen Leistung zumindest näherungsweise einem zeitlichen Verlauf der Temperatur (T) entspricht, und insbesondere
**dadurch gekennzeichnet, dass** die Strombeaufschlagung der Magnetfelderzeugungseinrichtung (20) für Steuerpausenzeiten deaktiviert wird, und dass die Regelung der Temperatur (T) gemäß der Temperaturverlaufsvorgabe (35') über die Deaktivierung der Strombeaufschlagung mit den Steuerpausenzeiten erfolgt.

3. Reparaturverfahren nach einem der vorangehenden Ansprüche, **dadurch gekennzeichnet, dass** die Temperaturverlaufsvorgabe (35') innerhalb des Arbeitsbereichs (77b) zumindest näherungsweise konstant ist.

4. Reparaturverfahren nach einem der vorangehenden Ansprüche, **dadurch gekennzeichnet, dass** für den Fall eines thermoplastischen Reparaturmaterials (16) die Temperaturverlaufsvorgabe (35') innerhalb des Aufheizbereichs (77a) monoton steigend ist und insbesondere eine konstante Steigung aufweist.

5. Reparaturverfahren nach einem der vorangehenden Ansprüche, **dadurch gekennzeichnet, dass** für den Fall eines duroplastischen Reparaturmaterials (16) die Temperaturverlaufsvorgabe (35') innerhalb des Aufheizbereichs (77a) abschnittsweise monoton steigend ist und insbesondere abschnittsweise eine konstante Steigung aufweist.

6. Reparaturverfahren nach einem der vorangehenden Ansprüche, **dadurch gekennzeichnet, dass** für den Fall eines duroplastischen Reparaturmaterials (16) die Temperaturverlaufsvorgabe (35') innerhalb des Aufheizbereichs (77a) einen Plateaubereich aufweist, in welchem die Temperaturverlaufsvorgabe (35') zumindest näherungsweise konstant ist und insbesondere dass innerhalb des Plateaubereichs flüchtige Komponenten des duroplastischen Reparaturmaterials (16) verdampft werden.

7. Reparaturverfahren nach einem der vorangehenden Ansprüche, **dadurch gekennzeichnet, dass** für den Fall eines duroplastischen Reparaturmaterials (16) die Temperaturverlaufsvorgabe (35') innerhalb des Aufheizbereichs (77a) ausgehend von einer Ausgangstemperatur einen Anstieg aufweist, dass auf den Anstieg ein Plateaubereich folgt, in welchem die Temperaturverlaufsvorgabe (35') zumindest näherungsweise konstant ist, und dass auf den Plateaubereich ein weiterer Anstieg folgt.

8. Reparaturverfahren nach einem der vorangehenden Ansprüche, **dadurch gekennzeichnet, dass** die Temperaturverlaufsvorgabe (35') einen sich an den Arbeitsbereich (77b) anschließenden Abkühlbereich (77c) aufweist, und insbesondere, dass die Temperaturverlaufsvorgabe (35') innerhalb des Abkühlbereichs (77c) monoton fallend ist und insbesondere eine konstante Steigung aufweist.

9. Reparaturverfahren nach einem der vorangehenden Ansprüche, **dadurch gekennzeichnet, dass** ein Unterdruckbereich (40) zwischen einer Vakuumhaube (42) der Induktionsheizvorrichtung (18) und dem Werkstück (12) hergestellt wird, und insbesondere dass ein Druck (P) innerhalb des Unterdruckbereichs (40) gemessen wird, und insbesondere dass der Druck (P) mittels der Steuer- und/oder Regeleinrichtung (34) gesteuert und/oder geregelt wird, und insbesondere
**dadurch gekennzeichnet, dass** die Steuerung und/oder Regelung des Drucks (P) durch die Steuer- und/oder Regeleinrichtung (34) gemäß eines vorgegebenen Arbeitsdrucks oder eines vorgegebenen Arbeitsdruckbereichs erfolgt, und insbesondere
**dadurch gekennzeichnet, dass** ein konstanter Abstand zwischen der Magnetfelderzeugungseinrichtung (20) und der Wärmequelle (22) hergestellt wird.

10. Reparaturverfahren nach einem der vorangehenden Ansprüche, **dadurch gekennzeichnet, dass** eine Strombeaufschlagung der Magnetfelderzeugungseinrichtung (20) für eine Pausenzeit (Z1) deaktiviert wird, und dass innerhalb dieser Pausenzeit (Z1) die Temperatur (T) gemessen wird und/oder ein Druck (P) gemessen wird, und dass die gemessene Temperatur (T) und/oder der gemessene Druck (P) innerhalb der Pausenzeit (Z1) an die Steuer- und/oder Regeleinrichtung (34) übermittelt wird, und insbesondere
**dadurch gekennzeichnet, dass** die Strombeaufschlagung mit einer Taktfrequenz zeitlich getaktet deaktiviert wird, und dass die Temperatur (T) und/oder der Druck (P) mit dieser Taktfrequenz zeitlich getaktet gemessen werden, und insbesondere
**dadurch gekennzeichnet, dass** die Temperatur (T) und/oder der Druck (P) um eine erste Wartezeit (Z2) zeitlich versetzt nach Beginn der Pausenzeit (Z1) gemessen werden, und insbesondere
**dadurch gekennzeichnet, dass** eine Messung der Temperatur (T) und/oder des Drucks (P) um eine zweite Wartezeit (Z3) zeitlich versetzt vor Ende der Pausenzeit (Z1) abgeschlossen ist.

11. Reparaturverfahren nach einem der vorangehenden Ansprüche, **dadurch gekennzeichnet, dass** das Reparaturmaterial (16) in fester Form an dem Reparaturbereich (14) angeordnet wird.

12. Reparaturverfahren nach einem der vorangehenden Ansprüche, **dadurch gekennzeichnet, dass** zwischen der Magnetfelderzeugungseinrichtung (20) und der Wärmequelle (22) eine thermische Isolierlage (80) angeordnet wird.

13. Reparaturvorrichtung geeignet, an einem Werkstück (12) aus einem Kunststoffmaterial angeordnet zu werden, umfassend eine Induktionsheizvorrichtung (18), welche geeignet ist, an dem Werkstück (12) angeordnet zu werden, und ein Reparaturmaterial (16), welches geeignet ist, an einem Reparaturbereich (14) des Werkstücks (12) angeordnet zu werden, wobei die Induktionsheizvorrichtung (18) eine Magnetfelderzeugungseinrichtung (20) und eine Wärmequelle (22) umfasst, die Magnetfelderzeugungseinrichtung (20) und die Wärmequelle (22) getrennte Komponenten der Induktionsheizvorrichtung (18) sind, welche getrennt voneinander positioniert werden können, die Wärmequelle (22) zwischen der Magnetfelderzeugungseinrichtung (20) und dem Reparaturbereich (14) angeordnet ist, und die Reparaturvorrichtung mindestens einen Temperatursensor (36) aufweist, **dadurch gekennzeichnet, dass** der mindestens eine Temperatursensor (36) eine Temperatur (T) misst, durch welche eine Wärmebeaufschlagung des Reparaturmaterials (16) durch die Wärmequelle (22) charakterisiert wird, dass der mindestens eine Temperatursensor (36) signalwirksam mit einer Steuer- und/oder Regeleinrichtung (34) verbunden ist, dass die Steuer- und/oder Regeleinrichtung (34) eine Speichereinrichtung (35) aufweist, in der eine Temperaturverlaufsvorgabe (35') gespeichert ist, und dass die Steuer- und/oder Regeleinrichtung (34) die durch den mindestens einen Temperatursensor (36) gemessene Temperatur (T) gemäß der gespeicherten Temperaturverlaufsvorgabe (35') steuert und/oder regelt.

14. Reparaturvorrichtung nach Anspruch 13, **dadurch gekennzeichnet, dass** die Induktionsheizvorrichtung (18) eine Vakuumhaube (42) umfasst, und insbesondere dass die Reparaturvorrichtung mindestens ein Drucksensor (52) aufweist, welcher in einem Unterdruckbereich (40) zwischen der Vakuumhaube (42) und dem Werkstück (12) angeordnet ist, wobei der mindestens eine Drucksensor (52) signalwirksam mit der Steuer- und/oder Regeleinrichtung (34) verbunden ist, welche den Druck (P) innerhalb des Unterdruckbereichs (40) steuert und/oder regelt.

15. Reparaturvorrichtung nach einem der Ansprüche 13 oder 14, **dadurch gekennzeichnet, dass** zwischen der Magnetfelderzeugungseinrichtung (20) und der Wärmequelle (22) eine thermische Isolierlage (80) angeordnet ist.

## Claims

1. Repair method for a workpiece (12) made of a plastic material, wherein an induction heating apparatus (18) is positioned at a repair region (14) of the workpiece (12), the induction heating apparatus (18) comprises a magnetic field generating device (20) and a heat source (22), wherein the magnetic field generating device (20) and the heat source (22) are separate components of the induction heating apparatus (18) that are able to be positioned separately from one another, the heat source (22) is arranged between the magnetic field generating device (20) and the repair region (14), a repair material (16) is positioned on the repair region (14), the repair material (16) is heated by way of the heat source (22) arranged at the repair region (14), and the heat source (22) is inductively heated by the magnetic field generating device (20), **characterized in that** a temperature (T) is measured, by which an application of heat to the repair material (16) by the heat source (22) is **characterized, in that** the temperature (T) is controlled and/or regulated by means of a controlling and/or regulating device (34), **in that** the control and/or regulation of the temperature (T) by the controlling and/or regulating device (34) occurs according to a temperature profile specification (35'), and **in that** the temperature profile specification (35') has a heating region (77a) and a working region (77b) following the heating region (77a).

2. Repair method in accordance with Claim **1, characterized in that** an electric current is applied to the magnetic field generating device (20), and **in that** the electric current and/or an electrical voltage and/or electrical power resulting from the application of current is a control variable, and in particular
**characterized in that** the electric current and/or the electrical voltage and/or the electrical power is controlled by the controlling and/or regulating device (34) in such a way that a time profile of an effective value (i) of the electric current and/or an effective value of the electrical voltage and/or an effective value of the electrical power at least approximately corresponds to a time profile of the temperature (T), and in particular
**characterized in that** the application of current to the magnetic field generating device (20) is deactivated for control pause times, and **in that** the regulation of the temperature (T) occurs according to the temperature profile specification (35') by deactivating the application of current with the control pause times.

3. Repair method in accordance with any one of the preceding Claims, **characterized in that** the temperature profile specification (35') is at least approximately constant within the working region (77b).

4. Repair method in accordance with any one of the preceding Claims, **characterized in that**, in the case of a thermoplastic repair material (16), the temperature profile specification (35') within the heating region (77a) is monotonically increasing and in particular has a constant slope.

5. Repair method in accordance with any one of the preceding Claims, **characterized in that**, in the case of a thermosetting repair material (16), the temperature profile specification (35') within the heating region (77a) is monotonically increasing in sections and in particular has a constant slope in sections.

6. Repair method in accordance with any one of the preceding Claims, **characterized in that**, in the case of a thermosetting repair material (16), the temperature profile specification (35') within the heating region (77a) has a plateau region in which the temperature profile specification (35') is at least approximately constant, and in particular **in that** within the plateau region, volatile components of the thermosetting repair material (16) are vaporized.

7. Repair method in accordance with any one of the preceding Claims, **characterized in that**, in the case of a thermosetting repair material (16), the temperature profile specification (35') within the heating region (77a) has an increase starting from an initial temperature, **in that** the increase is followed by a plateau region in which the temperature profile specification (35') is at least approximately constant, and **in that** the plateau region is followed by a further increase.

8. Repair method in accordance with any one of the preceding Claims, **characterized in that** the temperature profile specification (35') has a cooling region (77c) following the working region (77b), and in particular in that the temperature profile specification (35') within the cooling region (77c) is monotonically falling and in particular has a constant slope.

9. Repair method in accordance with any one of the preceding Claims, **characterized in that** a negative pressure region (40) is produced between a vacuum hood (42) of the induction heating apparatus (18) and the workpiece (12), and in particular **in that** a pressure (P) within the negative pressure region (40) is measured, and in particular **in that** the pressure (P) is controlled and/or regulated by means of the controlling and/or regulating device (34), and in particular
**characterized in that** the controlling and/or regulation of the pressure (P) by the controlling and/or regulating device (34) occurs according to a predetermined working pressure or a predetermined working pressure range, and in particular
**characterized in that** a constant distance is established between the magnetic field generating device (20) and the heat source (22).

10. Repair method in accordance with any one of the preceding Claims, **characterized in that** an application of current to the magnetic field generating device (20) is deactivated for a pause time (Z1), and **in that** within this pause time (Z1), the temperature (T) is measured and/or a pressure (P) is measured, and **in that** the temperature (T) measured and/or the pressure (P) measured is transmitted to the controlling and/or regulating device (34) within the pause time (Z1), and in particular
**characterized in that** the application of current is deactivated in a clock-timed manner with a clock frequency, and **in that** the temperature (T) and/or the pressure (P) is measured in a clock-timed manner with said clock frequency, and in particular
**characterized in that** the temperature (T) and/or the pressure (P) is measured temporally offset by a first wait time (Z2) after the beginning of the pause time (Z1), and in particular
**characterized in that** a measurement of the temperature (T) and/or the pressure (P) is completed temporally offset by a second wait time (Z3) before the end of the pause time (Z1).

11. Repair method in accordance with any one of the preceding Claims, **characterized in that** the repair material (16) is arranged in solid form on the repair region (14).

12. Repair method in accordance with any one of the preceding Claims, **characterized in that** a thermal insulating layer (80) is arranged between the magnetic field generating device (20) and the heat source (22).

13. Repair apparatus suited to be arranged on a workpiece (12) made of a plastic material, said repair apparatus comprising an induction heating apparatus (18) suited to be arranged on the workpiece (12), and a repair material (16) suited to be arranged on a repair region (14) of the workpiece (12), wherein the induction heating apparatus (18) comprises a magnetic field generating device (20) and a heat source (22), the magnetic field generating device (20) and the heat source (22) are separate components of the induction heating apparatus (18) that are able to be positioned separately from one another, the heat source (22) is arranged between the magnetic field generating device (20) and the repair region (14), and the repair apparatus has at least one temperature sensor (36), **characterized in that** the at least one temperature sensor (36) measures a temperature (T) by which an application of heat to the repair material (16) by the heat source (22) is **characterized, in that** the at least one temperature sensor (36) is signal-operatively connected to a controlling and/or regulating device (34), **in that** the controlling and/or regulating device (34) has a storage device (35) in which a temperature profile specification (35') is stored, and **in that** the controlling and/or regulating device (34) controls and/or regulates the temperature (T) measured by the at least one temperature sensor (36) according to the stored temperature profile specification (35').

14. Repair apparatus in accordance with Claim 13, **characterized in that** the induction heating apparatus (18) comprises a vacuum hood (42), and in particular **in that** the repair apparatus has at least one pressure sensor (52), which is arranged in a negative pressure region (40) between the vacuum hood (42) and the workpiece (12), wherein the at least one pressure sensor (52) is signal-operatively connected to the controlling and/or regulating device (34), which controls and/or regulates the pressure (P) within the negative pressure region (40).

15. Repair apparatus in accordance with either of Claims 13 or 14, **characterized in that** a thermal insulating layer (80) is arranged between the magnetic field generating device (20) and the heat source (22).

## Revendications

1. Procédé de réparation pour une pièce à usiner (12) en matériau plastique, dans lequel un dispositif de chauffage par induction (18) est positionné sur une zone de réparation (14) de la pièce à usiner (12), le dispositif de chauffage par induction (18) comprend un système de génération de champ magnétique (20) et une source de chaleur (22), dans lequel le système de génération de champ magnétique (20) et la source de chaleur (22) sont des composants séparés du dispositif de chauffage par induction (18), lesquels peuvent être positionnés séparément l'un de l'autre, la source de chaleur (22) est disposée entre le système de génération de champ magnétique (20) et la zone de réparation (14), un matériau de réparation (16) est positionné sur la zone de réparation (14), le matériau de réparation (16) est chauffé par la source de chaleur (22) disposée sur la zone de réparation (14), et la source de chaleur (22) est chauffée par induction par le système de génération de champ magnétique (20), **caractérisé en ce qu'**une température (T) est mesurée, par laquelle une exposition à la chaleur du matériau de réparation (16) par la source de chaleur (22) est caractérisée, que la température (T) est commandée et/ou régulée au moyen d'un système de commande et/ou de régulation (34), que la commande et/ou régulation de la température (T) s'effectue par le système de commande et/ou de régulation (34) selon une consigne de variation de température (35'), et que la consigne de variation de température (35') présente une zone de chauffage (77a) et une zone de travail (77b) adjacente à la zone de chauffage (77a).

2. Procédé de réparation selon la revendication 1, **caractérisé en ce que** le système de génération de champ magnétique (20) est sollicité avec un courant électrique, et que le courant électrique et/ou une tension électrique et/ou puissance électrique résultant de la sollicitation avec du courant est une grandeur de commande, et en particulier
**caractérisé en ce que** le courant électrique et/ou la tension électrique et/ou la puissance électrique sont commandés par le système de commande et/ou de régulation (34) de sorte qu'une variation temporelle d'une valeur effective (i) du courant électrique et/ou d'une valeur effective de la tension électrique et/ou d'une valeur effective de la puissance électrique correspond au moins approximativement à une variation temporelle de la température (T), et en particulier
**caractérisé en ce que** la sollicitation avec un courant du système de génération de champ magnétique (20) est désactivée pendant des temps de pause de commande, et que la régulation de la température (T) s'effectue selon la consigne de variation de température (35') par la désactivation de la sollicitation avec un courant avec les temps de pause de commande.

3. Procédé de réparation selon l'une quelconque des revendications précédentes, **caractérisé en ce que** la consigne de variation de température (35') à l'intérieur de la zone de travail (77b) est au moins approximativement constante.

4. Procédé de réparation selon l'une quelconque des revendications précédentes, **caractérisé en ce que**, dans le cas d'un matériau de réparation (16) thermoplastique, la consigne de variation de température (35') à l'intérieur de la zone de chauffage (77a) augmente de manière monotone et présente en particulier une pente constante.

5. Procédé de réparation selon l'une quelconque des revendications précédentes, **caractérisé en ce que**, dans le cas d'un matériau de réparation (16) thermodurcissable, la consigne de variation de température (35') à l'intérieur de la zone de chauffage (77a) augmente de manière monotone sur certaines sections et présente en particulier une pente constante sur certaines sections.

6. Procédé de réparation selon l'une quelconque des revendications précédentes, **caractérisé en ce que**, dans le cas d'un matériau de réparation (16) thermodurcissable, la consigne de variation de température (35') à l'intérieur de la zone de chauffage (77a) présente une zone de plateau dans laquelle la consigne de variation de température (35') est au moins approximativement constante et en particulier que des composants volatils du matériau de réparation (16) thermodurcissable s'évaporent à l'intérieur de la zone de plateau.

7. Procédé de réparation selon l'une quelconque des revendications précédentes, **caractérisé en ce que**, dans le cas d'un matériau de réparation (16) thermodurcissable, la consigne de variation de température (35') présente à l'intérieur de la zone de chauffage (77a) une augmentation à partir d'une température initiale, qu'une zone de plateau dans laquelle la consigne de variation de température (35') est au moins approximativement constante suit l'augmentation, et qu'une augmentation supplémentaire suit la zone de plateau.

8. Procédé de réparation selon l'une quelconque des revendications précédentes, **caractérisé en ce que** la consigne de variation de température (35') présente une zone de refroidissement (77c) adjacente à la zone de travail (77b), et en particulier que la consigne de variation de température (35') chute de façon monotone à l'intérieur de la zone de refroidissement (77c) et présente en particulier une pente constante.

9. Procédé de réparation selon l'une quelconque des revendications précédentes, **caractérisé en ce qu'**une zone de dépression (40) est établie entre un couvercle à vide (42) du dispositif de chauffage par induction (18) et la pièce à usiner (12), et en particulier qu'une pression (P) est mesurée à l'intérieur de la zone de dépression (40), et en particulier que la pression (P) est commandée et/ou régulée au moyen du système de commande et/ou de régulation (34), et en particulier
**caractérisé en ce que** la commande et/ou régulation de la pression (P) par le système de commande et/ou de régulation (34) s'effectue selon une pression de travail prédéterminée ou une plage de pression de travail prédéterminée, et en particulier
**caractérisé en ce qu'**une distance constante est établie entre le système de génération de champ magnétique (20) et la source de chaleur (22).

10. Procédé de réparation selon l'une quelconque des revendications précédentes, **caractérisé en ce qu'**une sollicitation avec un courant du système de génération de champ magnétique (20) est désactivée pendant un temps de pause (Z1), et que la température (T) est mesurée et/ou une pression (P) est mesurée pendant ce temps de pause (Z1), et que la température (T) mesurée et/ou la pression (P) mesurée est transmise au système de commande et/ou de régulation (34) pendant le temps de pause (Z1), et en particulier
**caractérisé en ce que** la sollicitation avec du courant est désactivée de manière cadencée dans le temps avec une fréquence de cadencement, et que la température (T) et/ou la pression (P) sont mesurées de manière cadencée dans le temps avec cette fréquence de cadencement, et en particulier
**caractérisé en ce que** la température (T) et/ou la pression (P) sont mesurées de manière décalée dans le temps d'un premier temps d'attente (Z2) après le début du temps de pause (Z1), et en particulier
**caractérisé en ce qu'**une mesure de la température (T) et/ou de la pression (P) est terminée de manière décalée dans le temps d'un deuxième temps d'attente (Z3) avant la fin du temps de pause (Z1).

11. Procédé de réparation selon l'une quelconque des revendications précédentes, **caractérisé en ce que** le matériau de réparation (16) est disposé sous forme fixe sur la zone de réparation (14).

12. Procédé de réparation selon l'une quelconque des revendications précédentes, **caractérisé en ce qu'**une couche d'isolation thermique (80) est disposée entre le système de génération de champ magnétique (20) et la source de chaleur (22).

13. Dispositif de réparation adapté à être disposé sur une pièce à usiner (12) en matériau plastique, comprenant un dispositif de chauffage par induction (18), lequel est adapté pour être disposé sur la pièce à usiner (12), et un matériau de réparation (16), lequel est adapté pour être disposé sur une zone de réparation (14) de la pièce à usiner (12),
dans lequel le dispositif de chauffage par induction (18) comprend un système de génération de champ magnétique (20) et une source de chaleur (22), le système de génération de champ magnétique (20) et la source de chaleur (22) sont des composants séparés du dispositif de chauffage par induction (18), lesquels peuvent être positionnés séparément l'un de l'autre, la source de chaleur (22) est disposée entre le système de génération de champ magnétique (20) et la zone de réparation (14), et le dispositif de réparation présente au moins un capteur de température (36), **caractérisé en ce que** l'au moins un capteur de température (36) mesure une température (T) par laquelle une exposition à la chaleur du matériau de réparation (16) par la source de chaleur (22) est caractérisée, que l'au moins un capteur de température (36) est relié à des fins de transmission de signaux à un système de commande et/ou de régulation (34), que le système de commande et/ou de régulation (34) présente un système de mémoire (35) dans lequel une consigne de variation de température (35') est enregistrée, et que le système de commande et/ou de régulation (34) commande et/ou régule la température (T) mesurée par l'au moins un capteur de température (36) selon la consigne de variation de température (35') enregistrée.

14. Dispositif de réparation selon la revendication 13, **caractérisé en ce que** le dispositif de chauffage par induction (18) comprend un couvercle à vide (42), et en particulier que le dispositif de réparation présente au moins un capteur de pression (52), lequel est disposé dans une zone de dépression (40) entre le couvercle à vide (42) et la pièce à usiner (12), dans lequel l'au moins un capteur de pression (52) est relié à des fins de transmission de signaux au système de commande et/ou de régulation (34), lequel commande et/ou régule la pression (P) à l'intérieur de la zone de dépression (40).

15. Dispositif de réparation selon l'une quelconque des revendications 13 ou 14, **caractérisé en ce qu'**une couche d'isolation thermique (80) est disposée entre le système de génération de champ magnétique (20) et la source de chaleur (22).
